# EUROPÄISCHE PATENTSCHRIFT

(11) **EP 3 433 576 B1**
(45) Veröffentlichungstag und Bekanntmachung des Hinweises auf die Patenterteilung: **25.12.2019**
(21) Anmeldenummer: 17719791.0
(22) Anmeldetag: 20.03.2017
(51) Int. Cl.: G01B 21/02, G01N 21/896

(54) **INSPEKTIONSANLAGE FÜR DAS OPTISCHE PRÜFEN EINER FLACHGLASSCHEIBE**
INSPECTION SYSTEM FOR OPTICALLY CHECKING A FLAT GLASS PANE
INSTALLATION D'INSPECTION POUR LA VÉRIFICATION OPTIQUE D'UNE PLAQUE DE VERRE PLANE

(30) Priorität: 21.03.2016 AT 1492016
(43) Veröffentlichungstag der Anmeldung: 30.01.2019
(73) Patentinhaber: Softsolution GmbH, 3340 Waidhofen an der Ybbs (AT)
(72) Erfinder: SONNLEITNER, Hermann, 3352 St. Peter in der Au (AT)
(86) Internationale Anmeldenummer: PCT/AT2017/000015
(87) Internationale Veröffentlichungsnummer: WO 2017/161390

(56) Entgegenhaltungen:
- EP-A2- 0 770 849
- DE-A1- 4 033 585
- DE-A1-102014 104 338

## Beschreibung

Die Erfindung betrifft eine Inspektionsanlage für das optische Prüfen einer Flachglasscheibe.

Bei verbreitet angewendeten Produktionsprozessen von Flachglasprodukten werden zugeschnittene und ggf. bearbeitete, sowie gereinigte Flachglasscheiben einer automatisch ablaufenden optischen Überprüfung unterzogen. Diese optische Überprüfung der jeweiligen Flachglasscheibe dient nicht nur zum Detektieren von optisch erkennbaren Glasfehlern, Verunreinigungen, Kratzern etc., sondern auch dazu, die Position von eventuellen Fehlstellen genau zu erkennen, sowie die Geometrie des Umrisses der Flachglasscheibe nachzumessen und ggf. auch dazu, das Vorhandensein von gewollten Bohrungen, Markierung etc. zu überprüfen und ggf. deren genaue Position zu vermessen.

Üblicherweise sind Inspektionsanlagen mit denen dieses automatische optische Prüfen durchgeführt wird, mit einer Fördervorrichtung für das Bewegen einer Flachglasscheibe und mit einer sich normal zur Förderrichtung über die Glasscheibe erstreckenden optischen Prüfungseinheit ausgestattet. Der sich jeweils an der optischen Prüfungseinheit befindliche Streifen der Glasscheibe - dessen Längsrichtung normal zur Förderrichtung der Scheibe ausgerichtet ist - wird durch die optischen Prüfungseinrichtung erfasst. Die optische Prüfungseinheit weist eine entlang ihrer Längsrichtung aufgereihte Reihe von optischen Sensoren (Digitalkameras) auf, sowie Lichtquellen, welche typischerweise durch die Flachglasscheibe hindurch auf die Sensoren leuchten. Eine logische Auswerteeinheit verarbeitet die Sensordaten der optischen Sensoren gemeinsam mit Daten bezüglich der jeweiligen Position der Flachglasscheibe in Förderrichtung und generiert die gesuchten Daten bezüglich Fehlerstellen, Positionen und Abmessungen.

Inspektionsanlagen dieser Art sind beispielsweise in den Schriften AT 11771U1, AT508636 B1 beschrieben. Bezüglich der notwendigen Messung des Vorschubes der Flachglasscheiben wird dazu geschrieben, der Vorschub könne genau gemessen werden; wie diese genaue Messung erfolge wird nicht erklärt.

Die DE102014104338 A1 befasst sich mit einer ähnlich aufgebauten Inspektionsanlage für das optische Überprüfen eines endlosen Flachglasbandes noch vor dem Zerschneiden zu Scheiben. Die notwendige Vorschubmessung erfolgt an Hand der Messung des Drehwinkels einer die Bewegung des Glasbandes antreibenden Rolle.

In DE 40 33 585 A1 ist eine Inspektionsanlage mit einem Drehgeber als Vorschubmesseinrichtung offenbart.

Üblicherweise wird in Inspektionsanlagen für das optische Prüfen einer Flachglasscheibe der Vorschub der Glasscheibe entweder gemessen, indem entweder die Geschwindigkeit des Antriebsmittels gemessen wird (Umfangsgeschwindigkeit einer angetriebenen die Flachglasscheibe tragenden Rolle, oder lineare Geschwindigkeit an einer Stelle eines Förderbandes welches die Flachglasscheibe trägt), oder indem an der Glasoberfläche eine drehbar gelagerte Rolle bekannten Durchmessers anliegt und der Drehwinkel der Rolle gemessen wird.

Das systematische Analysieren der Ursachen von aufgetauchten Maßproblemen an Flachglasscheiben, welche besagte Inspektionsanlagen scheinbar "erfolgreich" passiert haben, und das Erforschen der Ursachen für das Nichterkennen der Maßprobleme in den Inspektionsanlagen, führte zu der Erkenntnis, dass an den bekannten Inspektionsanlagen die Position der Flachglasscheiben in Förderrichtung häufig zu ungenau gemessen wird. Die Ursachen der Messfehler sind vor allem unterschiedlich gewichtete Mischungen daraus, dass sich kleine wiederkehrende Fehler entlang langer Scheiben zu großen Fehlern aufsummieren, und dass das Zusammenspiel von Elastizitäten und Massenträgheit das akkurate Messen vor allem im Nahbereich jener Scheibenränder verfälscht, welche in Förderrichtung vorne oder hinten liegen.

Die der Erfindung zu Grunde liegende Aufgabe besteht daher darin, an einer Inspektionsanlage der beschriebenen Art für das optische Untersuchen einer Flachglasscheibe, die Messung der Vorschubbewegung gegenüber den bisher bekannten Messmethoden dahingehend zu verbessern, dass die Messung weniger fehleranfällig ist.

Für das Lösen der Aufgabe wird eine Inspektionsanlage gemäß Anspuch 1 vorgeschlagen, mit einem Längenmaßstab, entlang dessen ein Messschieber bewegbar ist, dessen Relativposition zum Längenmaßstab sensorisch erfassbar ist, wobei der Längenmaßstab an der Inspektionsanlage ortsfest, parallel zur Förderrichtung der Flachglasscheibe ausgerichtet angebracht ist, und wobei während der Messung der Messschieber unbeweglich gegenüber dieser an der Flachglasscheibe verankert ist.

In einer bevorzugten Ausführung ist der Längenmaßstab ein sogenannter "magnetischer Maßstab". Das heißt, der Längenmaßstab weist eine Permanentmagnetisierung auf, deren Feldstärke sich entlang der Länge des Längenmaßstabes definiert periodisch ändert, und wobei der Messschieber mit einem Sensor für das Erfassen der Feldstärke ausgestattet ist. Damit ist das Erfassen der Relativposition des Messschiebers gegenüber dem Längenmaßstab bei vergleichbaren Kosten weniger störungsempfindlich sensorisch erfassbar als mit einem auf optisch sichtbaren Markierungen basierenden Maßstab.

Die Erfindung wird an Hand einer Zeichnung veranschaulicht:
- Fig. 1:: zeigt stark stilisiert wesentliche für das Verständnis der Erfindung wichtige Teile einer ersten beispielhaften erfindungsgemäßen Inspektionsanlage. Die Blickrichtung ist horizontal, normal zur Bewegungsrichtung der zu inspizierenden Glasscheibe.
- Fig. 2:: zeigt stark stilisiert eine zweite erfindungsgemäße Anlage mit Blickrichtung etwa normal zur Ebene der zu inspizierenden Glasscheibe.
- Fig. 3:: zeigt stark stilisiert eine dritte erfindungsgemäße Anlage mit Blickrichtung etwa normal zur Ebene der zu inspizierenden Glasscheibe.

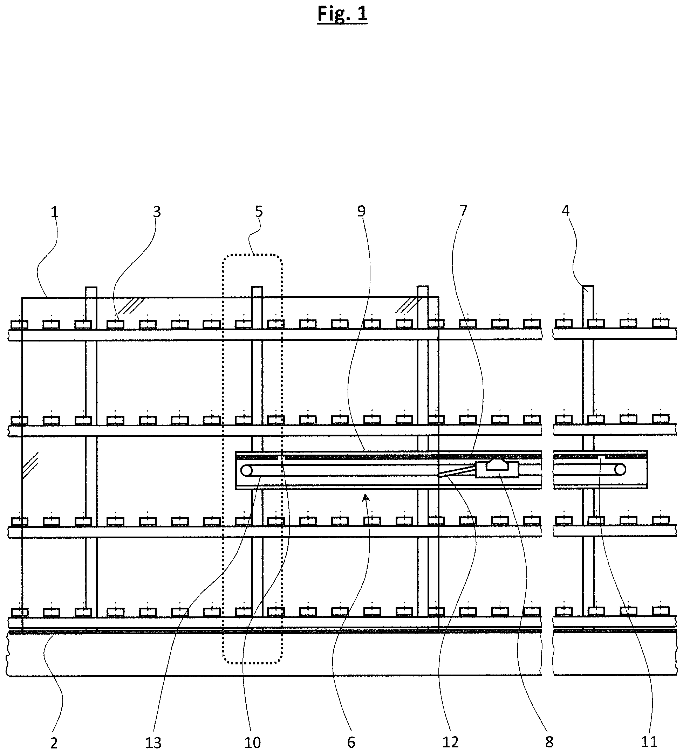

Auf der Inspektionsanlage gemäß Fig. 1 ruht die Flachglasscheibe 1 mit ihrer unteren Stirnseite 1 auf einem Förderband 2 und wird durch dieses horizontal nach rechts bewegt. Die Ebene der Flachglasscheibe 1 ist leicht nach hinten geneigt, sodass die Flachglasscheibe an der Mantelfläche von Rollen 3 anliegt, welche auf einem als Gitter aufgebauten Rahmen 4 drehbar frei befestigt sind, wobei alle Drehachsen in einer zur Scheibenebene parallelen Ebene liegen und normal zur Bewegungsrichtung des Förderbandes 2 ausgerichtet sind. Der Rahmen 4 mit den Rollen 3 liegt in Fig. 1 vom Betrachter aus gesehen hinter der Flachglasscheibe 1. (Bei manchen Anlagen wird die Funktion der Rollen 3 durch Luftkissen übernommen.)

Als punktierter Linienzug ist die Position der optischen Prüfungseinheit 5 angedeutet, welche sich bei der Anordnung von Fig. 1 näher beim Betrachter befindet als die Flachglasscheibe 1.

Bestimmungsgemäß wird die Flachglasscheibe 1 durch das Förderband 2 zwischen der optischen Prüfungseinheit 5 und dem Rahmen 4 mit den Rollen 3 von links nach rechts hindurchgeführt, wobei der jeweils an der optischen Prüfungseinheit 5 befindliche, streifenförmige Längsbereich des Flachglasscheibe durch dies Prüfungseinheit 5 optisch erfasst wird.

Unregelmäßigkeiten (Verschmutzungen, Bohrungen, Kratzer, Ränder..) auf bzw. an der Flachglasscheibe 1 führen zu Veränderungen der Intensität und/oder Ablenkung von Licht, welches von Lichtquellen durch die Flachglasscheibe 1 hindurch an die optische Prüfungseinheit 5 gelangt. Durch die optische Prüfungseinheit 5 werden diese Veränderungen einschließlich deren Position relativ zur optischen Prüfungseinheit 5 detektiert. Damit die Positionen dieser Unregelmäßigkeiten auf der Flachglasscheibe 1 auch in der zur Förderrichtung parallelen Koordinatenrichtung eindeutig zuordenbar sind, wird die jeweilige Position der Flachglasscheibe 1 in der zur Förderrichtung des Förderbandes 2 parallelen Richtung kontinuierlich gemessen.

Das letztgenannte Messen erfolgt mit der Messvorrichtung 6, welche erfindungsgemäß einen ortsfesten Längenmaßstab 7 und einen mit der Flachglasscheibe mitbewegten Messschieber 8 aufweist, dessen Relativposition zum Längenmaßstab 7 sensorisch erfassbar ist.

Bei der skizzierten, vorteilhaften Ausführungsform ist der Längenmaßstab 7 als magnetischer Maßstab ausgeführt. Genaugenommen ist der Längenmaßstab 7 ein Trägerband aus Kunststoff, in welches Partikel aus einem permanent magnetisierten Material eingebettet sind, wobei die Ausrichtung der permanenten Magnetisierung mit dem Verlauf des Bandes mit sehr kurzer Periodenlänge (im Bereich von Mikrometern) regelmäßig wechselt und wobei das Band an einem starren Trägerprofil 9, typischerweise aus Aluminium, verklebt ist. Das Trägerprofil 9 und mit diesem der Längenmaßstab 7 sind parallel zur Förderrichtung des Förderbandes 2 und damit der Bewegungsrichtung der Flachglasscheibe 1 ausgerichtet.

Der Messschieber 8 ist mit einem auf magnetische Feldstärkeänderungen sensiblen Sensor ausgestattet. Wenn er am Längenmaßstab 7 entlang bewegt wird, detektiert er die besagten Änderungen der Polarität der Magnetisierung und liefert dementsprechend pulsierende Signale. Aus der Anzahl dieser Signale, multipliziert mit der Periodenlänge der Wechsel der Magnetisierungsrichtung auf dem Längenmaßstab 7, ist der zurückgelegte Weg direkt errechenbar.

Es ist vorteilhaft separate Signalgeber 10, 11 an definierten Positionen des Längenmaßstabes 7 anzubringen, bei deren Passieren durch den Messschieber 8 ein separates Signal generiert wir sodass damit die Absolutposition des Messschiebers 8 erkannt wird.

Der Messschieber 8 ist am Trägerprofil 9 längsgeführt verschiebbar gehalten. Er weist einen Anschlagteil 12 auf, welcher relativ zum Messschieber 8 etwas um eine Achse schwenkbar ist, welche parallel zur Scheibenebene der Flachglasscheibe 1 liegt, sodass er mit seiner bestimmungsgemäßen Anschlagfläche mit der Flachglasscheibe 1 in die Ebene der Flachglasscheibe 1 schwenkbar ist bzw. daraus wegschwenkbar ist.

Ein Bewegungszyklus des Messschiebers 8 umfasst die folgenden Phasen:
a) Der Messschieber 8 wird durch die Flachglasscheibe 1, an deren in Bewegungsrichtung vorne liegender Stirnfläche der Anschlagteil 12 anliegt, dem Längenmaßstab 7 entlang verschoben. Während dieser Phase wird ggf. der jeweils an der optischen Prüfungseinheit 5 befindliche Teil der Flachglasscheibe 1 optisch untersucht und vermessen und auch die am Messschieber 8 generierten Pulse, werden gezählt.
b) Entweder wenn der Messschieber 8 an den Signalgeber 11 gelangt, oder wenn durch eine schnelle logische Auswerteeinheit erkannt wurde, dass die Flachglasscheibe 1 die Prüfungseinheit 5 vollständig passiert hat, wird der Anschlagteil 12 aus der Ebene der Flachglasscheibe 1 weg geschwenkt, sodass der Messschieber 8 nicht mehr mit der Flachglasscheibe 1 mitbewegt wird.
c) Ein Antrieb für das Bewegen des Messschiebers 8 entgegen der Förderrichtung des Förderbandes 2 wird in Gang gesetzt. Im skizzierten Beispiel ist beispielhaft angedeutet, dass dieser Antrieb ein Förderriemen 13, ist, welcher ebenfalls am Profil 19 bewegbar gehalten ist. Für das Bewegen des Messschiebers 8 entgegen der Förderrichtung des Förderbandes 2 wird der Anschlagteil 12 auf einen sich entgegengesetzt zur Förderrichtung des Förderbandes 2 bewegenden Teil eines Förderriemen 13 hin geschwenkt und mit diesem verriegelt.
   Für das Rückwärtsbewegen des Messschiebers sind auch andere Antriebssysteme als der Förderriemen 13 gut anwendbar. Ein beispielhafter, dafür besonders gut geeigneter Antrieb ist ein Linearmotor.
d) Sobald der Messschieber 8 an den Signalgeber 10 gelangt, und dadurch ein diese Position kennzeichnendes Signal gegeben wird, wird der Anschlagteil 12 wieder so geschwenkt, dass er mit dem Förderriemen 13 außer Eingriff kommt und seine bestimmungsgemäße Anschlagfläche in jener Ebene liegt, in welcher die nächste zu vermessende Flachglasscheibe liegt. Der Anschlagteil 12 und mit ihm der Messschieber 8 bleiben wartend in dieser Position.
e) Eine weitere Flachglasscheibe (1) stößt mit ihrer in Bewegungsrichtung des Förderbandes 2 vorne liegenden Stirnseite an den Anschlagteil 12 und startet damit die zur Bewegung der weiteren Flachglasscheibe (1) synchrone Verschiebung des Messschiebers 8 entlang des Längenmaßstabes 7.

Bevorzugt ist die Warteposition des Messschiebers 8 auf die jeweils nächste Flachglasscheibe 1 auf dem Weg der jeweils nächsten Flachglasscheibe 1 deutlich früher festgelegt, als die Flachglasscheibe 1 in den Messbereich der optischen Prüfungseinheit 5 gelangt. Dadurch können alle allfälligen dynamischen Ausgleichsvorgänge die durch den Stoß auf den Messschieber 8 und den damit in Gang gesetzten Beschleunigungsvorgang ausgelöst werden, abklingen, bevor das Vermessen der Flachglasscheibe 1 beginnt.

Anders als in Fig. 1 dargestellt ist es auch eine durchaus gute optionale Möglichkeit, für das Messen der Bewegung der Flachglasscheibe 1 den Messschieber 8 mit einem Anschlagteil an die bei der Bewegung der Flachglasscheibe 1 auf dem Förderband 2 hinten liegende Stirnfläche der Flachglasscheibe 1 anzudrücken. Idealerweise ist dazu der Messschieber 8 mit einem schwachen Antrieb mit Schlupf ausgestattet. (Der Schlupf lässt sich beispielsweise über eine Rutschkupplung zwischen Antriebsmaschine und Fahrwerk oder mittels eines schwachen Wechselstrom-Asynchronmotors realisieren.)

Zahl- und variantenreiche Test an mehreren Prototypen von erfindungsgemäßen Inspektionsanlagen zeigten, dass durch die erfindungsgemäße Bauweise die Vorschubbewegung der Flachglasscheibe markant exakter und mit markant weniger Fehleranfälligkeit gemessen werden kann.

In einer äquivalenten Umkehrung des vorgeschlagenen Messprinzips könnte auch der Längenmaßstab mit der Flachglasscheibe 1 mitbewegt werden und der Messschieber relativ zur optischen Prüfungseinheit ortsfest angebracht sein.

Das Förderband 2 ist ein gutes Beispiel für eine von vielen möglichen Ausführungsformen einer notwendigen Fördervorrichtung für das Bewegen der Flachglasscheibe 1. Gut geeignet wäre beispielsweise auch eine Rollenbahn mit angetriebenen Rollen, oder eine auf Schienen geführt bewegte Montageplattform.

Es ist vorteilhaft, für das Messen der Bewegung bzw. Position der Flachglasscheibe 1 in Förderrichtung des Förderbandes 1 nicht nur das beschriebene Prinzip mittels Längenmaßstab 7 und einen entlang dessen bewegten Messschieber 8 anzuwenden, sondern ergänzend eines der bisher üblichen Messverfahren anzuwenden, wie insbesondere das Messen der Bewegung des Förderbandes 2 oder der Bewegung des Antriebes des Förderbandes 2. Im Wesentlichen wird damit bei recht geringem Kostenaufwand die Betriebssicherheit der Inspektionsanlage verbessert, da in jenen ggf. nur kurz auftretenden Zeiträumen, in welchen das System aus Längenmaßstab 7 und Messschieber 8 aus irgendwelchen Gründen keine brauchbaren Werte liefert, auch mit dem herkömmlichen Messsystem überbrückend das Auslangen gefunden werden kann.

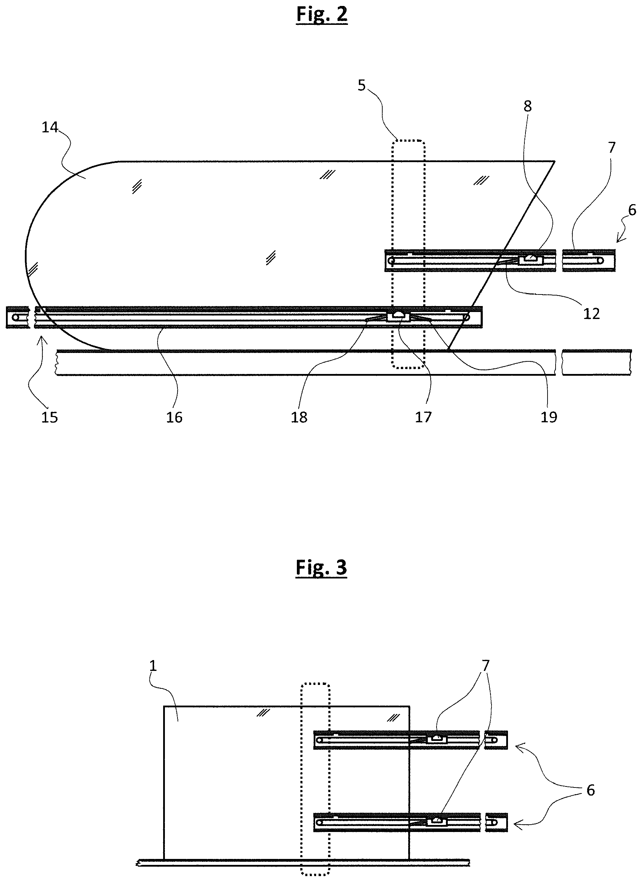

In Fig. 2 ist eine Bauweise einer erfindungsgemäßen Inspektionsanlage skizziert, welche dann besonders vorteilhaft ist, wenn die in Bewegungsrichtung (rechts) vorne liegende Stirnseite der Flachglasscheibe 14 nicht normal zur Bewegungsrichtung ausgerichtet ist, sondern in Bewegungsrichtung unterschiedlich weit vorne liegende Bereiche hat, und/oder wenn die Flachglasscheibe 14 in Bewegungsrichtung sehr lang ist.

Es werden zwei Messvorrichtungen 6, 15 verwendet, welche jeweils einen Längenmaßstab 7, 16 und einen zugehörigen Messschieber 8, 17 aufweisen. Dabei sind die Messvorrichtungen 6, 15 in Bewegungsrichtung der Flachglasscheibe 14 versetzt zueinander angeordnet sind, die Messbereiche jedoch überlappen sich.

Der bei bestimmungsgemäßer Bewegung der Flachglasscheibe 14 zuerst kontaktierte Messschieber 17 der erstgereihten Messvorrichtung 15 hat bezüglich der Bewegungsrichtung der Flachglasscheibe 14 sowohl an der hinten liegenden Seite als auch an der vorne liegenden Seite jeweils einen Anschlagteil 18, 19.

Der bei bestimmungsgemäßer Bewegung der Flachglasscheibe 14 an seinem linken Anschlagteil 18 zuerst kontaktierte Messschieber 17 des Längenmaßstabs 16 detektiert Bewegung und damit Koordinaten der Flachglasscheibe 14 in Bewegungsrichtung schon bevor irgend ein Bereich der Flachglasscheibe 14 an die optische Prüfungseinheit 5 gelangt. Nachdem die Flachglasscheibe 14 so weit bewegt wurde, dass ihre vordere Stirnseite auch den Anschlagteil 12 des Messschieber 8 des nachgereihten Längenmaßstabes 7 kontaktiert hat, übernimmt der Messschieber 8 das Detektieren der Bewegungskoordinaten der Flachglasscheibe 14. Der linke Anschlagteil 18 des zuvor aktiven Messschiebers 17 wird mit der Flachglasscheibe 14 außer Kontakt gebracht und der Messschieber 17 wird durch einen "eigenen" Antrieb entgegen der Bewegungsrichtung der Flachglasscheibe 14 zurückbewegt. Sobald die in deren Bewegungsrichtung hinten liegende Stirnseite der Flachglasscheibe 14 den Messschieber 17 passiert hat, kann dieser mittels seines eigenen Antriebs von hinten her so an die Flachglasscheibe 14 angefahren werden, dass er mit seinem in Bewegungsrichtung vorne liegenden Anschlagteil 19 an der hinteren Stirnseite der Flachglasscheibe 14 anliegt. Damit kann nun wieder der hintere Messschieber 17 das Detektieren der Bewegungskoordinaten der Flachglasscheibe 14 übernehmen. Auf diese Weise können die Bewegungskoordinaten der Flachglasscheibe 14 auch dann lückenlos aufgezeichnet werden, wenn die Flachglasscheibe 14 so lang ist, dass sie mit ihrem vorderen Flächenbereich schon über das der optischen Prüfungseinheit 5 abgewandt liegende Ende des Messbereichs des in Bewegungsrichtung nachgereihten Längenmaßstabs 7 hinausragt, bevor sie mit ihrer hinteren Stirnfläche die optische Prüfungseinheit 5 vollständig passiert hat.

Die Bauweise gemäß Fig. 3 ist dann wertvoll, wenn die zu inspizierende Flachglasscheibe 1 in liegendem Zustand transportiert wird. Bei dieser Transportart besteht die Gefahr, dass die Flachglasscheibe 1 während des Transportes um zur Scheibenfläche normal liegende Achsen verdreht wird, womit die Angaben von Koordinaten von festgestellten Fehlerstellen verfälscht werden würde. Um dieses Verdrehen zu verhindern ist gemäß der Bauweise von Fig. 3 vorgesehen, zwei nebeneinander angeordnete Messvorrichtungen 6 zu verwenden. Beim bestimmungsgemäßen Betrieb bekommen beide Messschieber 8 mit ihrem Anschlagteil in Kontakt mit der in Bewegungsrichtung (in Fig. 3 nach rechts) vorderen Stirnseite der Flachglasscheibe 1. Sobald beide Messschieber 8 mit besagter Stirnseite in Kontakt gekommen sind, wird ihre Bewegung so überwacht und ausgeregelt, dass keiner der beiden Messschieber in seiner Bewegung jemals langsamer ist als der jeweils andere Messschieber, und dennoch immer zumindest einer der beiden Messschieber mit einer kleinen Druckkraft an der Flachglasscheibe 1 anliegt.

## Patentansprüche

1. Inspektionsanlage für das automatische optische Prüfen einer Flachglasscheibe (1, 14), wobei die Inspektionsanlage eine Fördervorrichtung für das lineare Bewegen der Flachglasscheibe (1, 14) entlang einer optischen Prüfungseinheit (5), die Teil der Inspektionsanlage ist, aufweist, sowie eine Messvorrichtung (6, 15), welche in der zur Förderrichtung der Fördervorrichtung parallelen Richtung die Position der Flachglasscheibe (1, 14) relativ zur optischen Prüfungseinheit (5) laufend misst,
**dadurch gekennzeichnet, dass**
die Messvorrichtung (6, 15) einen parallel zur Förderrichtung ausgerichteten Längenmaßstab (7, 16) und einen entlang desselben bewegbaren Messschieber (8, 17) aufweist, dessen Relativposition zum Längenmaßstab (7, 16) sensorisch erfassbar ist, und wobei einer der beiden Teile Längenmaßstab (7, 16) und Messschieber (8, 17) gegenüber der optischen Prüfungseinheit (5) ortsfest angeordnet ist, und der andere Teil mit der Flachglasscheibe (1, 14) mitbewegbar ist.

2. Inspektionsanlage nach Anspruch 1, **dadurch gekennzeichnet, dass** der mit der Flachglasscheibe (1, 14) mitbewegbare Teil über einen Anschlagteil (12) an einer in Bewegungsrichtung der Flachglasscheibe (1, 14) vorne oder hinten liegenden Stirnseite der Flachglasscheibe (1, 14) anliegt, und dass der Anschlagteil (12) aus der Ebene der Flachglasscheibe (1, 14) weg schwenkbar ist.

3. Inspektionsanlage nach Anspruch 1 oder 2, **dadurch gekennzeichnet, dass** in Förderrichtung der Flachglasscheibe (1, 14) der Beginn jenes Wegbereiches, ab welchem die Flachglasscheibe (1, 14) in den Messbereich der optischen Prüfungseinheit (5) ragt, nachgereiht zum Beginn jenes Wegbereiches liegt, in welchem der mit der Flachglasscheibe (1, 14) mitbewegbare Teil durch die Flachglasscheibe (1, 14) mitbewegbar ist.

4. Inspektionsanlage nach einem der Ansprüche 1 bis 3 **dadurch gekennzeichnet, dass** der mit der Flachglasscheibe (1, 14) mitbewegbare Teil durch einen Antrieb, welcher von der Fördervorrichtung für die Flachglasscheibe (1, 14) unabhängig ist, parallel zur Bewegungsrichtung der Flachglasscheibe (1, 14) angetrieben bewegbar ist.

5. Inspektionsanlage nach einem der Ansprüche 1 bis 4 **dadurch gekennzeichnet, dass** der Längenmaßstab (7, 16) eine Permanentmagnetisierung aufweist, deren Feldstärke sich entlang der Länge des Längenmaßstabes (7, 16) definiert periodisch ändert und dass der Messschieber (8, 17) mit einem Sensor für das Erfassen der Feldstärke ausgestattet ist.

6. Inspektionsanlage nach einem der Ansprüche 1 bis 5, **dadurch gekennzeichnet, dass** der Längenmaßstab (7, 16) gegenüber der optischen Prüfungseinheit (5) ortsfest angeordnet ist.

7. Inspektionsanlage nach einem der Ansprüche 1 bis 6, **dadurch gekennzeichnet, dass** die Fördervorrichtung ein Förderband (2) ist.

8. Inspektionsanlage nach einem der Ansprüche 1 bis 7, **dadurch gekennzeichnet, dass** Messvorrichtungen (6, 15) in Bewegungsrichtung der Flachglasscheibe (14) versetzt zueinander angeordnet sind und dass sich die Messbereiche der beiden Messvorrichtungen (6, 15) überlappen.

9. Inspektionsanlage nach Anspruch 4 und Anspruch 8, **dadurch gekennzeichnet, dass** der mit der Flachglasscheibe (14) mitbewegbare Teil der durch die Flachglasscheibe (14) als erstes passierten Messvorrichtung (15) zwei Anschlagteile (18, 19) aufweist, wobei bezüglich der Bewegungsrichtung der Flachglasscheibe (14) wahlweise der eine Anschlagteil (18) an der vorderen Stirnseite der Flachglasscheibe (14) anlegbar ist, und der zweite Anschlagteil (19) an der hinteren Stirnseite der Flachglasscheibe (14) anlegbar ist.

10. Inspektionsanlage nach einem der Ansprüche 1 bis 9, **dadurch gekennzeichnet, dass** zwei Messvorrichtungen (6) nebeneinander angeordnet sind.

11. Inspektionsanlage nach Anspruch 10, **dadurch gekennzeichnet, dass** die Messvorrichtungen (6) eine gemeinsame Überwachung und Regelung aufweisen, welche dazu ausgelegt ist, Bewegung der mit der Flachglasscheibe (1) mitbewegbaren Teile der beiden Messvorrichtungen (6) ab dem Zeitpunkt dass beide Teile mit der Flachglasscheibe (1) in Kontakt gekommen sind, so einzustellen, dass sich keiner der beiden Teile jemals langsamer bewegt als der jeweils andere Teil, und dass dabei immer zumindest einer der beiden Teile unter Druck an der Flachglasscheibe (1) anliegt.

## Claims

1. Inspection system for the automatic optical inspection of a flat glass pane (1, 14), wherein the inspection system has a conveying device for the linear movement of the flat glass pane (1, 14) along an optical inspection unit (5), which is part of the inspection system, and a measuring device (6, 15), which, in the direction parallel to the conveying direction of the conveying device, continuously measures the position of the flat glass pane (1, 14) relative to the optical inspection unit (5),
**characterised in that**
the measuring device (6, 15) has a linear scale (7, 16) aligned parallel to the conveying direction and a calliper (8, 17) movable along the same, the relative position of which to the linear scale (7, 16) can be sensorially detected, and wherein one of the two parts linear scale (7, 16) and calliper (8, 17) is arranged in a fixed position relative to the optical inspection unit (5), and the other part is moveable with the flat glass pane (1, 14).

2. Inspection system according to claim 1, **characterised in that** the part moveable with the flat glass pane (1, 14) abuts, via a fitting part (12), a front or rear end face of the flat glass pane (1, 14) in the direction of movement of the flat glass pane (1, 14), and **in that** the fitting part (12) can be pivoted away from the plane of the flat glass pane (1, 14).

3. Inspection system according to claim 1 or 2, **characterised in that**, in the conveying direction of the flat glass pane (1, 14), the beginning of that travel range from which the flat glass pane (1, 14) projects into the measuring range of the optical inspection unit (5), is lined up behind at the beginning of that travel range, in which the part moveable with the flat glass pane (1, 14) is moveable via the flat glass pane (1, 14).

4. Inspection system according to one of claims 1 to 3, **characterised in that** the part moveable with the flat glass pane (1, 14) can be driven to move parallel to the direction of movement of the flat glass pane (1, 14) by a drive which is independent of the conveying device for the flat glass pane (1, 14).

5. Inspection system according to one of claims 1 to 4, **characterised in that** the linear scale (7, 16) is constantly magnetised, the field strength of which periodically changes as defined along the length of the linear scale (7, 16), and that the calliper (8, 17) is equipped with a sensor for detecting the field strength.

6. Inspection system according to one of claims 1 to 5, **characterised in that** the linear scale (7, 16) is arranged in a fixed position relative to the optical inspection unit (5).

7. Inspection system according to one of claims 1 to 6, **characterised in that** the conveying device is a conveyor belt (2).

8. Inspection system according to one of claims 1 to 7, **characterised in that** measuring devices (6, 15) are arranged offset to one another in the direction of movement of the flat glass pane (14) and that the measuring ranges of the two measuring devices (6, 15) overlap.

9. Inspection system according to claim 4 and claim 8, **characterised in that** the part moveable with the flat glass pane (14) of the measuring device (15) that is first passed by the flat glass pane (14) has two fitting parts (18, 19), wherein with respect to the direction of movement of the flat glass pane (14), optionally a fitting part (18) can be set on the front end face of the flat glass pane (14) and the second fitting part (19) can be set on the rear end face of the flat glass pane (14).

10. Inspection system according to one of claims 1 to 9, **characterised in that** two measuring devices (6) are arranged adjacent to one another.

11. Inspection system according to claim 10, **characterised in that** the measuring devices (6) have a common monitoring and control, which is designed to adjust movement of the parts moveable with the flat glass pane (1) of the two measuring devices (6), from the time that both parts have come into contact with the flat glass pane (1), in such a way that neither of the two parts ever moves slower than the respective other part, and that thereby at least one of the two parts always abuts the flat glass pane (1) under pressure.

## Revendications

1. Installation d'inspection pour la vérification optique automatique d'une plaque de verre plane (1, 14), l'installation d'inspection présentant un dispositif de transport pour le déplacement linéaire d'une plaque de verre plane (1, 14) le long d'une unité de vérification optique (5), laquelle fait partie de l'installation d'inspection, ainsi qu'un dispositif de mesure (6, 15) qui mesure en continu, dans la direction parallèle à la direction de transport du dispositif de transport, la position de la plaque de verre plane (1, 14) par rapport à l'unité de vérification optique (5),
**caractérisée en ce que**
le dispositif de mesure (6, 15) présente une échelle de longueur (7, 16) agencée parallèlement à la direction de transport et un pied à coulisse (8, 17) pouvant être déplacé le long de cette dernière, et dont la position relative par rapport à l'échelle de longueur (7, 16) peut être détectée par un système de capteur, **en ce que** l'une des deux pièces, l'échelle de longueur (7, 16) et le pied à coulisse (8, 17), est agencée à une position fixe par rapport à l'unité de vérification optique (5), et **en ce que** l'autre pièce peut être déplacée conjointement avec la plaque de verre plane (1, 14).

2. Installation d'inspection selon la revendication 1, **caractérisée en ce que** la pièce pouvant être déplacée conjointement avec la plaque de verre plane (1, 14) repose, par le biais d'un élément de butée (12), sur une face frontale avant ou arrière de la plaque de verre plane (1, 14) dans le sens de déplacement de la plaque de verre plane (1, 14), et **en ce que** l'élément de butée (12) peut être pivoté en dehors du plan de la plaque de verre plane (1, 14).

3. Installation d'inspection selon la revendication 1 ou 2, **caractérisée en ce que** dans la direction de transport de la plaque de verre plane (1, 14), le début de la plage de course à partir d'où la plaque de verre plane (1, 14) entre dans la plage de mesure de l'unité de vérification optique (5) se situe en arrière, au début de la plage de course, dans laquelle la pièce pouvant être déplacée avec la plaque de verre plane (1, 14) peut être déplacée par la plaque de verre plane (1, 14).

4. Installation d'inspection selon l'une des revendications 1 à 3, **caractérisée en ce que** la pièce pouvant être déplacée avec la plaque de verre plane (1, 14) est entraînée parallèlement au sens de déplacement de la plaque de verre plane (1, 14) par un entraînement qui est indépendant de la direction de transport de la plaque de verre plane (1, 14).

5. Installation d'inspection selon l'une des revendications 1 à 4, **caractérisée en ce que** l'échelle de longueur (7, 16) présente une aimantation permanente, dont l'intensité de champ se modifie de façon périodique le long de la longueur de l'échelle de longueur (7, 16), tel que défini, et **en ce que** le pied à coulisse (8, 17) est équipé d'un capteur pour détecter l'intensité de champ.

6. Installation d'inspection selon l'une des revendications 1 à 5, **caractérisée en ce que** l'échelle de longueur (7, 16) est agencée fixe par rapport à l'unité de vérification optique (5).

7. Installation d'inspection selon l'une des revendications 1 à 6, **caractérisée en ce que** le dispositif de transport est un convoyeur (2).

8. Installation d'inspection selon l'une des revendications 1 à 7, **caractérisée en ce que** les dispositifs de mesure (6, 15) sont agencés décalés les uns par rapport aux autres dans le sens de déplacement de la plaque de verre plane (14), et **en ce que** les zones de mesure des deux dispositifs de mesure (6, 15) se chevauchent.

9. Installation d'inspection selon les revendications 4 et 8, **caractérisée en ce que** la pièce pouvant être déplacée avec la plaque de verre plane (14) du dispositif de mesure (15) étant passé le premier par la plaque de verre plane (14), présente deux éléments de butée (18, 19), dans laquelle, en ce qui concerne le sens de déplacement de la plaque de verre plane (14), au choix un élément de butée (18) peut être monté sur le côté frontal avant de la plaque de verre plane (14) et le deuxième élément de butée (19) sur le côté frontal arrière de la plaque de verre plane (14).

10. Installation d'inspection selon l'une des revendications 1 à 9, **caractérisée en ce que** deux dispositifs de mesure (6) sont agencés l'un à côté de l'autre.

11. Installation d'inspection selon la revendication 10, **caractérisée en ce que** les dispositifs de mesure (6) présentent une surveillance et une régulation commune qui est conçue pour régler le mouvement des pièces pouvant être déplacées avec la plaque de verre plane (1) des deux dispositifs de mesure (6) à partir du moment où les deux pièces sont entrées en contact avec la plaque de verre plane (1), de sorte qu'aucune des deux pièces n'est déplacée plus lentement que l'autre pièce, et **en ce que** pour ce faire, au moins l'une des deux pièces repose toujours sous pression contre la plaque de verre plane (1).
